# EUROPÄISCHE PATENTSCHRIFT

(11) **EP 0 969 406 B1**
(45) Veröffentlichungstag und Bekanntmachung des Hinweises auf die Patenterteilung: **10.12.2008**
(21) Anmeldenummer: 99111404.2
(22) Anmeldetag: 11.06.1999
(51) Int. Cl.: G06K 13/08, G06K 17/00

(54) **Mittel zur Drehmomentbegrenzung in einer dem Transport von Aufzeichnungsträgern dienenden Transporteinrichtung**
Means for torque limitation in a transport mechanism for feeding record carriers
Moyens pour la limitation de couple dans un mécanisme de transport pour l'alimentation de supports d'enregistrement

(30) Priorität: 01.07.1998 DE 29811676 U
(43) Veröffentlichungstag der Anmeldung: 05.01.2000
(73) Patentinhaber: Continental Automotive GmbH, 30165 Hannover (DE)
(72) Erfinder: Helmschrott, Norbert, 78054 Villingen-Schwenningen (DE); Knauer, Norbert Dipl.-Ing., 78647 Trossingen (DE); Säger, Benjamin Dipl.-Ing., 78050 Villingen-Schwenningen (DE)

(56) Entgegenhaltungen:
- DE-A- 2 234 595
- US-A- 4 903 044
- PATENT ABSTRACTS OF JAPAN vol. 016, no. 042 (P-1306), 31. Januar 1992 (1992-01-31) & JP 03 248290 A (KYODO PRINTING CO LTD;OTHERS: 01), 6. November 1991 (1991-11-06)
- PATENT ABSTRACTS OF JAPAN vol. 016, no. 516 (P-1443), 23. Oktober 1992 (1992-10-23) & JP 04 190475 A (CANON INC), 8. Juli 1992 (1992-07-08)

## Beschreibung

Mittel zur Drehmomentbegrenzung in einer dem Transport von Aufzeichnungsträgern dienenden Transporteinrichtung mit wenigstens einem auf einer Welle angebrachten Friktionskörper und einem dem Antrieb der Welle dienenden Zahnrad.

Beim selbsttätigen Transport flacher Aufzeichnungsträger, beispielsweise Diagrammscheiben, kartenförmige Diagrammträger oder Datenkarten zwischen einer Eingabe-/Entnahmeposition und einer Registrier- bzw. Lese-/Schreibposition werden im allgemeinen motorisch betätigte Friktionskörper verwendet, die in geeigneter Weise für eine Mitnahme der Aufzeichnungsträger ausgebildet sind. Dabei ist es wichtig, daß eine sichere Mitnahme gewährleistet ist, also eine relativ hohe Anpreßkraft zwischen dem bzw. den vorgesehenen Friktionskörpern und dem Aufzeichnungsträger gegeben und somit ein relativ hohes Antriebsdrehmoment erforderlich ist.

Zur Sicherstellung, daß der transportierte Aufzeichnungsträger sich tatsächlich in der Registrier- bzw. in der Lese/Schreibposition befindet ist im allgemeinen ein "Überhub" der Transportmittel vorgesehen, der dazu führt, daß zwischen dem an einem Anschlag anliegenden Aufzeichnungsträger und dem Friktionskörper bis zur sensorgesteuerten Abschaltung des Antriebes Schlupf entsteht. Bei Aufzeichnungsträgern mit relativ weicher oder druckempfindlicher Registrierschicht entstehen auf diese Weise störende Markierungen bzw. Schleifspuren, außerdem beeinträchtigt Abrieb die Oberflächenrauhigkeit des Friktionskörpers. Bei Aufzeichnungsträgern mit geringer Steifigkeit kann es zusätzlich zu Stauchungen kommen. Im Gegensatz hierzu ist bei relativ steifen Aufzeichnungsträgern, gegebenenfalls mit rauher Oberfläche, die Gefahr des Abriebes des Friktionskörpers gegeben. Hinzu kommt, daß ein selbsttätiger Transport der Aufzeichnungsträger verbunden mit einer Eingabe durch einen Schlitz eine geringe Bauhöhe des betreffenden Registriergerätes ermöglicht und unter diesen Umständen für eine Transporteinrichtung bezüglich deren Bauhöhe nur ein begrenzter Bauraum zur Verfügung steht, das heißt, die Durchmesser der Antriebsmittel klein gehalten werden müssen.

JP 03-248290 offenbart eine Transportvorrichtung mit Mittel zur Drehmomentsbegrenzung, die lediglich beim Transport in die Registrier- bzw. Lese-/Schreibposition wirksam sind. Die Aufgabe der vorliegenden Erfindung besteht darin diese Mittel in einem extrem engen Bauraum zu realisieren, und zwar derart, daß ihre Funktion in der Serienfertigung zuverlässig reproduzierbar ist und Ermüdungserscheinungen innerhalb einer vernünftigen Betätigungsdauer vernachlässigbar sind.

Diese Aufgabe wird gelöst mit den Merkmalen des Anspruchs 1.

Die in den Ansprüchen beschriebene Lösung der gestellten Aufgabe bietet den Vorteil, daß ein einer hohen Anpreßkraft entsprechendes Antriebsdrehmoment gewählt werden kann und damit auch gewährleistet ist, daß bei ungünstigen Toleranzlagen und temperatur- und feuchtigkeitsbedingter Schwergängigkeit das Einziehen und insbesondere das Ausgeben der Aufzeichnungsträger störungsfrei erfolgt und daß beim Anschlagen des Aufzeichnungsträgers in der Registrier- bzw. Lese-/Schreibposition eine zur Vermeidung der geschilderten Nachteile ausreichende Begrenzung der auf den Aufzeichnungsträger einwirkenden antriebsbedingten Kräfte gegeben ist.

Die gefundene Lösung eignet sich insb. für den vorgegebenen minimalen Bauraum. Das heißt, die vorzugsweise aus Stahl geformte Blattfeder bietet mit einem relativ langen Federarm gute Federungsfähigkeit und somit ausreichend Ermüdungssicherheit. Sie ist aufgrund ihrer Geometrie auch gut reproduzierbar. Ferner ist infolge des radialen Wirkprinzips die vorgesehene Blattfeder an einem größtmöglichen Hebelarm wirksam, so daß zusammen mit der relativ großflächigen Auflage des äußeren Federendes auf jeweils einer Schulter eines Zahnes der Rastverzahnung auch bei geringerer Federhärte ein relativ hohes Kupplungsmoment erzielbar ist. Mit anderen Worten, die vorgeschlagene Lösung bietet bei den gegebenen Raumverhältnissen, im Gegensatz beispielsweise zu denkbaren axial wirkenden Kupplungsmitteln mit beispielsweise einem einer radialen Rastverzahnung zugeordneten Federung, ausreichend Möglichkeit des Abstimmens der Kupplungskraft. Hervorgehoben sei ferner die trotz des engbegrenzten Bauraumes zweistellige und somit kippfreie Lagerung des treibenden Zahnrades bzw. die kippfreie Abstützung der radial wirkenden Blattfeder.

Im folgenden sei die Erfindung anhand der beigefügten Zeichnungen näher erläutert. Von den Zeichnungen zeigen:
- Figur 1: eine weitgehend schematisierte Darstellung der Transportmittel eines als Anwendungsbeispiel gewählten Fahrtschreibers mit Diagrammscheiben als Aufzeichnungsträger,
- Figur 2: einen Längsschnitt einer dem Transport der Diagrammscheiben in Umfangsrichtung dienenden Baugruppe,
- Figur 3: einen Querschnitt der Baugruppe gemäß der Schnittlinie A-B in Figur 2.

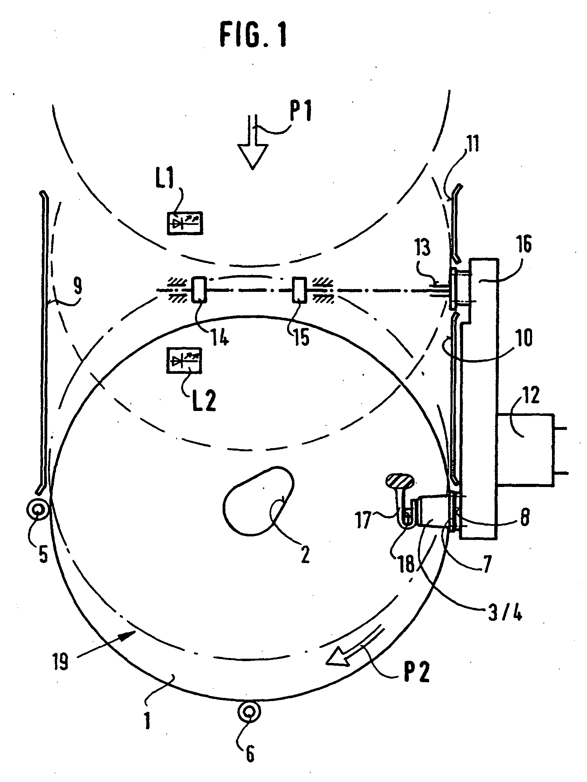

Bei dem als Anwendungsbeispiel für die Erfindung gewählten Fahrtschreiber ist, was der Vereinfachung halber nicht dargestellt ist, frontseitig ein Schlitz vorgesehen, über den Diagrammscheiben in den Fahrtschreiber eingegeben bzw. an dem beschriebene Diagrammscheiben, beispielsweise nach dem Betätigen einer Taste, entnommen werden können. Wie aus der Figur 1 ersichtlich ist, hat eine in Pfeilrichtung P1 eingegebene Diagrammscheibe 1, die mit einer vorzugsweise eiförmigen Aufnahmeöffnung 2 versehen ist, bereits die Registrierposition erreicht, in der sie zum Auffädeln auf einen nicht dargestellten, an einer heb- und senkbaren Diagrammscheibenaufnahme ausgebildeten Zentner- und Mitnahmedorn in Umfangsrichtung (Pfeil P2) von einem auf einer Welle 3 aufgebrachten Friktionskörper 4 angetrieben wird. Geführt ist die Diagrammscheibe 1 in der Registrierposition von Führungsrollen 5 und 6 sowie einem an der Welle 3 ausgebildeten Flansch 7. Ein die Welle 3 treibendes Zahnrad ist mit 8 bezeichnet. Mit 9, 10 und 11 sind den Führungsschacht, in dem die Diagrammscheiben transportiert werden, seitlich begrenzende Stirnwände bezeichnet, während L1 und L2 dem Führungsschacht zugeordnete Lichtschranken darstellen. Das Getriebe, welches die Drehbewegungen eines Motors 12 einerseits auf die Welle 3, andererseits auf eine Welle 13 leitet, auf welcher zwei Transportrollen 14 und 15 mit einem die Aufnahmeöffnung 2 der Diagrammscheiben berücksichtigenden Abstand angeordnet sind, ist in einem gemeinsamen, auch den Motor 12 aufnehmenden Gehäuse 16 gelagert und als Baueinheit dem Führungsschacht zugeordnet. Ein in geeigneter Weise ortsfest angebrachter, vorzugsweise federnd ausgebildeter Arm 17 dient der Aufnahme eines Lagerzapfens 18 der Welle 3.

Der Vollständigkeit halber sei zur Funktion der in Figur 1 skizzierten Transporteinrichtung noch erwähnt, daß wenn eine durch den Schlitz in dem betreffenden Registriergerät eingeführte Diagrammscheibe 1 bis zu den Transportrollen 14, 15 vorgesteckt wird, die Lichtschranke L1 unterbrochen und der Motor 12 des Positioniergetriebes auf Einziehen der Diagrammscheibe 1 angesteuert wird.

In der strichpunktiert dargestellten Position 19 wird die eingegebene Diagrammscheibe 1, die bis dahin zwischen den Führungswänden 9, 10 und 11 des Führungsschachtes ausschließlich in diametraler Richtung durch die Transportrollen 14 und 15 transportiert worden ist, von dem Friktionskörper 4 übernommen, in die Registrierposition geführt und in Umfangsrichtung angetrieben. Ferner sei erwähnt, daß dem Friktionskörper 4 eine Gegendruckrolle zugeordnet ist, die Teil eines Impulsgebers darstellt. Der Positionierantrieb wird abgeschaltet, wenn der Impulsgeber keine Impulse mehr liefert, das heißt, die Diagrammscheibe 1 auf dem Zentrierdorn aufgespindelt ist. Gleichzeitig wird auch die Gegendruckrolle abgehoben, um den Zeitantrieb der Diagrammscheibe zu entlasten. Wie bereits eingangs geschildert, kann es abhängig von den jeweiligen Toleranzadditionen bis zu dieser Abschaltung insbesondere durch den relativ langen Hebelarm, an dem der Friktionskörper 4 wirksam ist, zu Stauchungen des Randes der Aufnahmeöffnung 2 kommen. Außerdem sind Schleifspuren aufgrund des Schlupfes des Friktionskörpers 4 auf der Diagrammscheibe 1 in Kauf zu nehmen.

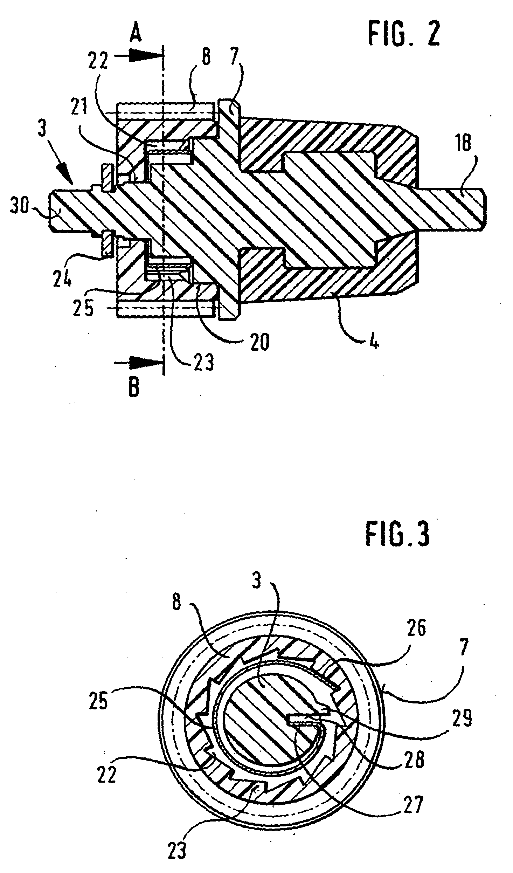

Zur Beseitigung dieser Probleme ist erfindungsgemäß eine Rastkupplung zwischen der Welle 3, 4 und dem antreibenden Zahnrad 8 vorgesehen. Letzteres ist, wie die Figur 2 zeigt, kippfrei auf Ansätzen unterschiedlichen Durchmesers 20 und 21 der Welle 3 drehbar gelagert und mit einer in einer Senkung 22 ausgebildeten Rastverzahnung - ein Rastzahn ist mit 23 bezeichnet - versehen. Der axialen Sicherung des Zahnrades 8 auf der Welle 3 dient einerseits der an der Welle 3 angeformte Flansch 7 andererseits eine auf der Welle 3 befestigte Sicherungsscheibe 24. Die Rastkupplung umfaßt ferner eine spiralig gewundene, eingängige Blattfeder 25, deren äußeres Ende 26 wenigstens auf einer Länge, die der Schulter eines Rastzahnes 23 entspricht, eben ausgebildet ist, damit es, wie in Figur 3 dargestellt, auf der gesamten Fläche der Schulter eines Rastzahnes 23 aufliegen kann und auf diese Weise ein ausreichender, das heißt, für die Überwindung der Reibung beim Aufspindeln der Diagrammscheiben erforderliches Kupplungsmoment gegeben ist. Das innere Ende 27 der Blattfeder 25 ist zum Einhängen in einen in der Welle 3 ausgeformten Schlitz 28 rechtwinklig angebogen. Die Blattfeder 25, die vorzugsweise aus Stahl hergestellt ist, ist axial zwischen dem Ansatz 20 der Welle 3 und dem Grund der Senkung 22 gefaßt bzw. lose gehaltert. Eine dem Schlitz 28 randlich zugeordnete Rippe 29 dient dazu, bei der Montage der Blattfeder 25 eine funktionsrichtige Lage zu gewährleisten. Außerdem sei darauf hingewiesen, daß die Rastkupplung derart gestaltet ist, daß mit ihr, was insbesondere beim Abspindeln einer Diagrammscheibe 1 von dem Zentrierdorn erforderlich sein kann, das maximal mögliche Drehmoment des Positionierantriebes mit hoher Sicherheit auf den Friktionskörper 4, welcher an der Welle 3 fest angeformt ist, übertragen wird. Wie aus der Figur 2 ferner noch hervorgeht, bilden die mit dem Friktionskörper 4 versehene Welle 3, deren zweiter Lagerzapfen mit 30 bezeichnet ist, und das Zahnrad 8, das die Rastkupplung einschließt, eine Baueinheit, die unabhängig von der Montage eines Gerätes funktionsfertig montierbar ist.

## Patentansprüche

1. Mittel zur Drehmomentbegrenzung in einer dem Transport von Aufzeichnungsträgern (1) dienenden Transporteinrichtung mit wenigstens einem auf einer Welle (3) angebrachten Friktionskörper (4) und einem dem Antrieb der Welle dienenden Zahnrad (8), wobei
das Zahnrad (8) drehbar auf der Welle (3) gelagert ist, **dadurch gekennzeichnet, daß** zwischen dem Zahnrad (8) und der Welle (3) eine Rastkupplung (22, 25) vorgesehen ist.

2. Anordnung nach Anspruch 1,
**dadurch gekennzeichnet,**
**daß** als Rastkupplung eine in einer Senkung (22) des Zahnrades (8) axial ausgebildete Rastverzahnung und eine mit der Rastverzahnung zusammen wirkende, spiralig gewundene Blattfeder (25) vorgesehen ist.

3. Anordnung nach Anspruch 2,
**dadurch gekennzeichnet,**
**daß** die Blattfeder eingängig geformt ist und
**daß** das innere Ende (27) der Blattfeder (25) rechtwinklig angebogen ist und das äußere Ende (26) in einem, wenigstens der Länge der Zahnschulter eines Zahnes (23) der Rastverzahnung entsprechenden Bereich eben ausgebildet ist.

4. Anordnung nach Anspruch 1,
**dadurch gekennzeichnet,**
**daß** das Zahnrad (8) zweistellig auf an der Welle (3) ausgebildeten Ansätzen (20, 21) gelagert ist.

## Claims

1. Means for limiting the torque in a transport device which serves to transport recording media (1) and has at least one friction element (4) which is attached on a shaft (3) and a gearwheel (8) which serves to drive the shaft, the gearwheel (8) being mounted rotatably on the shaft (3), **characterized in that** a latching coupling (22, 25) is provided between the gearwheel (8) and the shaft (3).

2. Arrangement according to Claim 1, **characterized in that** a latching toothing system which is formed axially in a counterbore (22) of the gearwheel (8) and a spirally wound leaf spring (25) which interacts with the latching toothing system are provided as a latching coupling.

3. Arrangement according to Claim 2, **characterized in that** the leaf spring is shaped with a single winding, and **in that** the inner end (27) of the leaf spring (25) is slightly bent at right angles and the outer end (26) is of flat configuration in a region which corresponds at least to the length of the tooth shoulder of a tooth (23) of the latching toothing system.

4. Arrangement according to Claim 1, **characterized in that** the gearwheel (8) is mounted at two points on projections (20, 21) which are formed on the shaft (3).

## Revendications

1. Moyen permettant de limiter le couple de rotation dans un mécanisme de transport servant au transport de supports d'enregistrement (1), comportant au moins un corps de friction (4) monté sur un arbre (3) et une roue dentée (8) servant à entrainer l'arbre, où la roue dentée (8) est montée en rotation sur l'arbre (3),
**caractérisé par le fait**
**qu'**il est prévu un accouplement à encliquetage (22, 25) entre la roue dentée (8) et l'arbre (3).

2. Dispositif selon la revendication 1,
**caractérisé par le fait**
**qu'**il est prévu, en tant qu'accouplement à encliquetage, une denture à encliquetage ménagée dans le sens axial dans un enfoncement (22) de la roue dentée (8) et un ressort à lame (25) monté en spirale agissant en commun avec la denture à encliquetage.

3. Dispositif selon la revendication 2,
**caractérisé par le fait**
**que** le ressort à lame est façonné à pas simple et
**que** l'extrémité intérieure (27) du ressort à lame (25) est pliée à angle droit et
**que** l'extrémité extérieure (26) est façonnée plane dans une partie correspondant au moins à la longueur d'un épaulement d'une dent (23) de la denture à encliquetage.

4. Dispositif selon la revendication 1,
**caractérisé par le fait**
**que** la roue dentée (8) est fixée en deux endroits sur des saillies (20, 21) ménagées sur l'arbre (3).
